# EUROPÄISCHE PATENTSCHRIFT

(11) **EP 3 350 496 B1**
(45) Veröffentlichungstag und Bekanntmachung des Hinweises auf die Patenterteilung: **11.10.2023**
(21) Anmeldenummer: 16765998.6
(22) Anmeldetag: 15.09.2016
(51) Int. Cl.: F16L 23/04, F16L 47/14, B65D 63/10

(54) **VERBINDUNGSANORDNUNG SOWIE ANDOCKVERFAHREN UND KUPPELVERFAHREN**
CLAMPING-ACTION ARRANGEMENT AND ALSO DOCKING METHOD AND COUPLING METHOD
DISPOSITIF DE SERRAGE AINSI QUE PROCÉDÉ D'ARRIMAGE ET PROCÉDÉ D'ACCOUPLEMENT

(30) Priorität: 15.09.2015 DE 102015115544
(43) Veröffentlichungstag der Anmeldung: 25.07.2018
(73) Patentinhaber: Andocksysteme G. Untch GmbH, 79410 Badenweiler (DE)
(72) Erfinder: UNTCH, Günter, 79410 Badenweiler (DE)
(74) Vertreter: Walther Bayer Faber Patentanwälte PartGmbB
(86) Internationale Anmeldenummer: PCT/EP2016/071786
(87) Internationale Veröffentlichungsnummer: WO 2017/046220

(56) Entgegenhaltungen:
- WO-A1-2009/051591
- GB-A- 886 036
- US-A1- 2007 028 426
- US-A1- 2010 132 165

## Beschreibung

Die Erfindung betrifft eine Verbindungsanordnung mit einem Klemmbinder sowie ein Andockverfahren und ein Kuppelverfahren, insbesondere zum Andocken bzw. Kuppeln zweier Rohre, Flansche oder dergleichen, besonders bevorzugt für ein kontaminationsfreies Verbinden beispielsweise zweier Gebinde oder zweier Leitungen.

Zwei Rohre oder Flansche werden nach technischen Standards, beispielsweise DIN 32676, mittels meist aus zwei umschließenden Hälften bestehenden Verschlussklammern verbunden. Oft fällt hier auch der Begriff Tri-Clamp-Verbindungen. Solche Verschlussklammern, wie beispielsweise in EP 1 230 505 B1 beschrieben, werden auf einer offenen Seite mittels Flügelmutter oder dergleichen nach einem Umlegen um das Rohr oder den Flansch verschlossen. Die Hälften umschließen das Rohr oder den Flansch immer fester, wobei eine möglichst gleichmäßige Anpressung über den gesamten Umfang angestrebt wird. Ausführungen aus Kunststoff sind auch bekannt. Schließlich gestatten solche Verbindungshilfen, dass - nach außen abgedichtet - durch sie hindurch entlang einer Achse ein Durchfluss, beispielsweise eines Schüttgutes, geführt werden kann.

Bekannte Andockverfahren zum kontaminationsfreien Verbinden zweier Gebinde oder Rohrleitungen, beispielsweise mit einem Segmentventil oder nach DE 10 2011 009 303, haben oft Schnittstellen, die sehr aufwändig und teuer für eine ausreichende Abdichtung zu verbinden sind. Weitere Klemmverbinder zum Verbinden von Rohrleitungen sind in der US 2010/0132165 A1, der WO 2009/051591 A1 und der GB 886 036 A offenbart. Ein handelsüblicher Kabelbinder, der nicht zum Verbinden von Rohrleitungen oder Gebinden geeignet ist, ist in der US 2007/028426 A1 offenbart.

Ob beim Verbinden von Feuerwehrschläuchen oder bei teurerer Anlagentechnik: Klemmen für das Verbinden von Rohren, Flanschen oder dergleichen sollen bei möglichst geringen Stückkosten produzierbar sein, in ihrer Handhabung unproblematisch und / oder für Materialkombinationen von Kunststoff und Metall uneingeschränkt verwendbar sein.

Dieses Problem wird durch eine Verbindungsanordnung mit einem Klemmbinder mit den Merkmalen des Anspruchs 1 umfassend seine kennzeichnenden Merkmale und ein Andockverfahren nach Anspruch 14 und ein Kuppelverfahren nach Anspruch 15 gelöst.

Weitere vorteilhafte Ausgestaltungen der Erfindung bilden die Gegenstände jeweiliger Unteransprüche.

Nach der der Erfindung zugrunde liegenden Idee klemmt ein einziges, vollständig um 360° umlaufend gefertigtes Bindemittel zwei in axialer Richtung aufeinanderstoßende Teile gegeneinander, wobei eine Hand die Teile halten und die andere Hand zum Klemmen mit oder ohne weiteres Werkzeug an einem freien Ende des Bindemittels ziehen kann, um die Klemmung zu vervollständigen.

Vorteilhafte Ausführungsformen des Klemmbinders bestehen vollständig aus Kunststoff und sind für den Single-Use-Einsatz vorgesehen.

Als Schnellverschluss ist der erfindungsgemäße Klemmbinder je nach Ausführungsform leicht zu öffnen und/oder zu schließen und dabei sehr belastbar. Vielseitige Anwendungsmöglichkeiten stehen offen.

Mit bekannten ergonomischen Kabelbinderzangen könnte ohne Verletzungsgefahr, gelenkschonend in der Anwendung, definiert angezogen und bündig abgeschnitten werden, dies in einem Arbeitsgang.

Das erfindungsgemäße Andockverfahren zum kontaminationsfreien Verbinden zweier Gebinde oder Rohrleitungen nutzt einen solchen Klemmbinder der Verbindungsanordnung vorteilhaft. Das Andockverfahren ist automatisierbar und sicher.

Nachfolgend wird die Erfindung anhand von einem in Figuren dargestellten Ausführungsbeispiel näher beschrieben. Es zeigen
Fig. 1 eine perspektivische Darstellung eines um ein Klemmgebundenes verschlossenen Klemmbinders einer erfindungsgemäßen Verbindungsanordnung,
Fig. 2 eine Draufsicht in axialer Richtung auf die Verbindungsanordnung aus Figur 1,
Fig. 3 einen Axialschnitt durch die Verbindungsanordnung aus Figur 1,
Fig. 4 eine perspektivische Ansicht auf einen separat dargestellten gestreckten Klemmbinder der erfindungsgemäßen Verbindungsanordnung auf dessen spätere Radialaußenseite,
Fig. 5 eine Draufsicht auf den gestreckten Klemmbinder aus Figur 4 auf dessen spätere als Klemmseite ausgebildete Radialinnenseite,
Fig. 6 eine Seitenansicht auf eine Schmalseite des gestreckten Klemmbinders aus Figur 4 mit nach unten gerichteter Klemmseite.

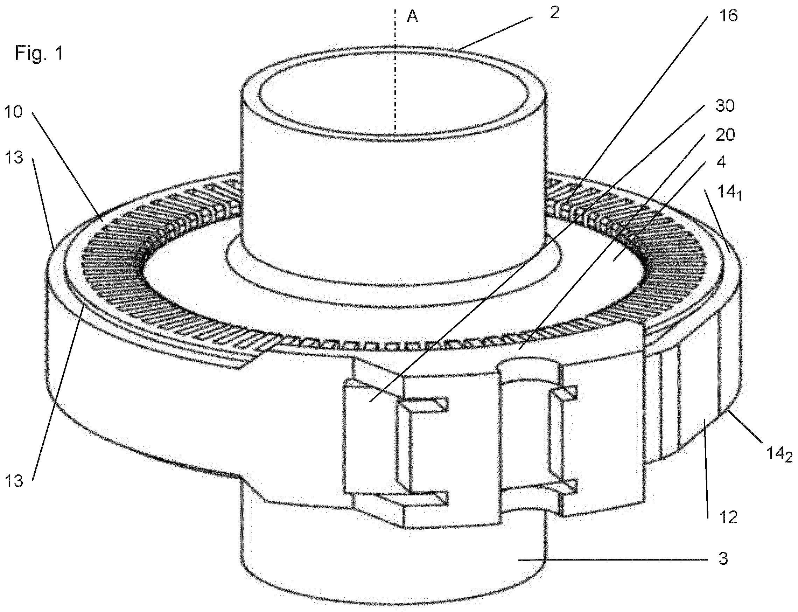

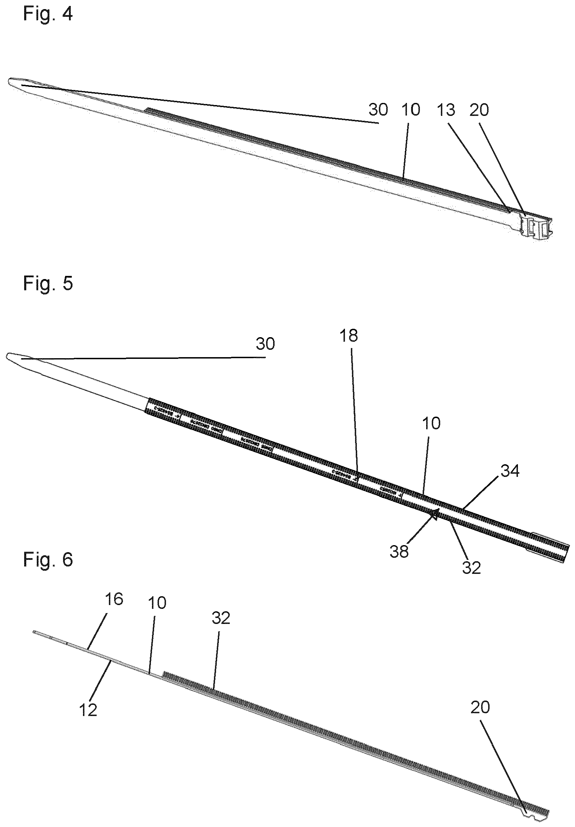

Ein erfindungsgemäßes Ausführungsbeispiel eines Klemmbinders 1 einer Verbindungsanordnung ist in den Figuren 1 bis 6 dargestellt. Die Darstellungen der Figuren 1 bis 3 mit klemmgebundenen Rohrenden (2, 3) umfassend aufeinander anliegende Flansche (4) im Vergleich zu den Darstellungen der Figuren 4 bis 6 ohne Klemmgebundenes verdeutlichen in Zusammenschau das erfindungsgemäße Kuppelverfahren.

Die Bezugszeichen sind zur besseren Übersicht nicht sämtlich in allen Figuren eingetragen.

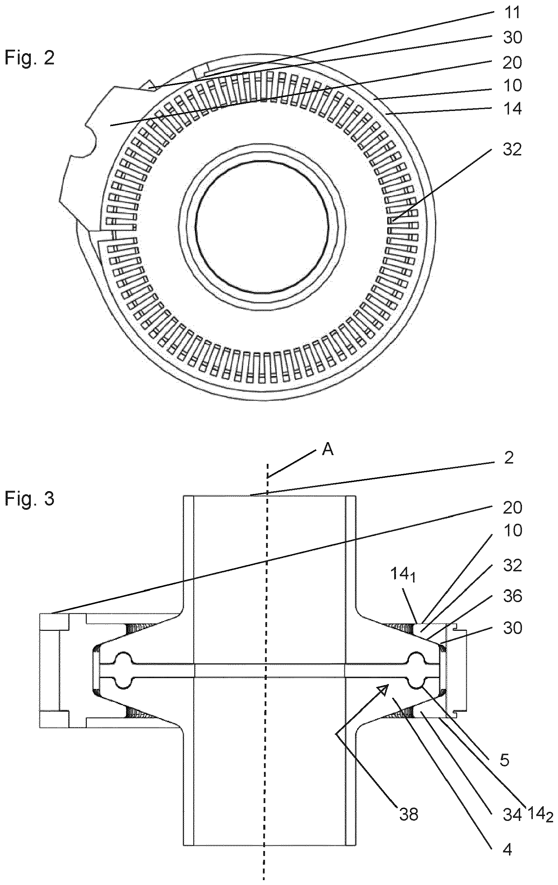

Der Klemmbinder 1 verbindet gemäß den Figuren 1 bis 3 zwei Leitungen 2, 3 mit Flanschen 4 aufeinander. In dem Axialschnitt der Figur 3 ist gezeigt, dass zwischen den Flanschen 4 eine umlaufende Dichtung in eine Vertiefung 5 einlegbar ist.

Der Klemmbinder 1 weist nach diesem dargestellten Ausführungsbeispiel ein flexibles Bindemittel 10 mit einem Verschlussende 20 und einem mit dem Verschlussende 20 in Verbindung zu bringenden freien Ende 30 auf. Das Bindemittel 10 ist um eine Achse A herum bevorzugt gestuft rastend nach dem Vorbild eines Kabelbinders schließbar. Eine Schließseite 12 des Bindemittels 10 ist während eines Verschließvorgangs aus der gestreckten Position nach den Figuren 4 bis 6 in die Schließposition nach den Figuren 1 bis 3 mechanisch mit dem Verschlussende 20 wechselwirkend zu funktionieren bestimmt, sobald das freie Ende 30 vorliegend in das Verschlussende 20 eindringt.

Das Bindemittel 10 hat vorliegend in axialer Richtung A von oben nach unten aufeinander folgend
- eine obere Schmalseite 14₁,
- radial innen eine Klemmseite 16 mit zu den Flanschen hin abstehenden Klemmzähnen
- und dazu parallel weiter radial außen angeordnet eine Schließseite 12 und
- eine untere Schmalseite 14₂ des Bindemittels 10.

Radial innen sind die Verschlusszähne mit axial A zueinander beabstandeten Erhebungen 32, 34 ausgebildet. Ein Klemmzahn hat zwei Erhebungen 32, 34 und einen dazwischen die Flansche 4 klemmenden Klemmbereich 38. Über die Länge des Bindemittels 10 sind solche Erhebungen an zumindest zwei Umfangsstellen anzuordnen, sodass die Erfindung erfolgreich funktioniert. Vorliegend sind es deutlich mehr Erhebungen.

Der Klemmbereich 38 ist zwischen einem zusammenwirkenden Erhebungsverband ausgeführt, vorliegend gebildet aus zwei V-förmig nach radial innen abstehenden von dem Bindemittel 10 abstehende Schenkel.

In diesem besonderen Fall nach insbesondere Figur 3 sind beide Erhebungen 32, 34 des jeweiligen zusammenwirkenden Erhebungsverbandes als symmetrisch aufeinander zulaufende Schenkel mit jeweils einer Klemmflanke 36 zu dem Bindemittel hin verjüngend ausgeführt, um während des Schließvorganges und danach anhaltend Kraft in das Klemmgebundene einzuleiten, nämlich vorliegend Axial- und Radialkräfte.

Die Erhebungen 32, 34 sind nach dem dargestellten Ausführungsbeispiel aus demselben Material des Klemmbinders angeformt. Der Klemmbinder ist nach dieser besonders vorteilhaften Ausführungsform ein Spritzgussteil aus einem einzigen Kunststoffformprozess.

Das Bindemittel 10 des dargestellten Ausführungsbeispiels ist ein Band aus Kunststoff. Das Verschlussende 20 ist schematisch dargestellt. Nach bekannten Kabelbindervarianten kann der Verschluss im Rahmen der Erfindung als zerstörungsfrei lösbar verschließbarer und wiederverschließbarer Verschluss ausgebildet sein. Derartige Kabelbinder sind in der US 2007/0028426 A1 offenbart.

Der Klemmbinder ist nach Figur 5 mit Sollbruchstellen 18 für mehrere Durchmesser des Klemmgebundenen anpassbar ausgebildet. Die Sollbruchstellen sind zwischen radial inneren Abschnitten der Klemmseite angeordnet. Die Abschnitte sind händisch abtrennbar, in dem die Abschnitte an den Sollbruchstellen 18 abgeknickt oder abgedreht werden.

Ein die Schließseite 12 aufweisendes Außenband weist axial voneinander beabstandet zwei Innenkonturen 13 auf, welche Innenkonturen 13 flächenkongruent zu Außenkonturen eines die Klemmseite 16 aufweisenden Innenbandes ausgeführt sind. Diese Bänder können flächig aneinander anliegend ausgeführt sein, auch wenn der gesamte Klemmbinder in einem einzigen Kunststoffformprozess gefertigt wurde.

In einem Verschlussbereich an dem Verschlussende 20 oder daran angrenzend ist ein nach radial innen ausgerichteter Absatz 11, den man auch als Stufe bezeichnen könnte, ausgeführt. Von den Schmalseiten her aufeinander zulaufend sind nach der dargestellten vorteilhaften Ausführungsform Schmalseiteneinschnürungen an dem Bindemittel 10 ausgeführt.

Ein erfindungsgemäßes Kuppelverfahren umfasst in den Figuren nachvollziehbar die Verfahrensschritte: Umlegen eines einzigen Klemmbinders 1 um zwei klemmzubindene Kuppelenden, wie Rohrenden 2, 3 mit Flanschen 4 oder dergleichen, bis das freies Ende 30 in das Verschlussende 20 des Klemmbinders 1 eintaucht. Sodann kann ein Nachjustieren der Kuppelenden erfolgen, insbesondere deren Dichtflächen, ggf. Einlegen einer Dichtung zwischen die Kuppelenden. Danach erst wird die Verbindung mittels Zug am freien Ende 30 festgezogen, wobei die Kuppelenden aneinander geklemmt werden.

### Bezugszeichenliste

- 1: Klemmbinder
- 2: Leitung
- 3: Leitung
- 4: Flansch

- 10: Bindemittel
- 11: Absatz
- 12: Schließseite
- 13: Einschnürung
- 14: Schmalseite
- 14₁: obere Schmalseite
- 14₂: untere Schmalseite
- 16: Klemmseite
- 18: Sollbruchstellen

- 20: Verschlussende

- 30: freies Ende
- 32: erste Erhebung
- 34: zweite Erhebung
- 36: Klemmflanke
- 38: Klemmbereich

- A: Achse

## Patentansprüche

1. Verbindungsanordnung, umfassend
- zwei klemmzubindende Kuppelenden wie Rohrenden, Flansche (4) oder dergleichen sowie einen Klemmbinder (1) zum Andocken der Kuppelenden, wobei
- der Klemmbinder (1) aus zumindest einem flexiblen Bindemittel (10) mit einem Verschlussende (20) und einem mit dem Verschlussende (20) in Verbindung zu bringenden freien Ende (30) besteht, welches Bindemittel (10) um eine Achse (A) herum gestuft rastend oder stufenlos schließbar ist, wobei
- ein Klemmgebundenes die zwei klemmzubindene Kuppelenden umfasst und radial innerhalb des Bindemittels (10) in Richtung der Achse (A) verläuft,
- das Bindemittel (10) in axialer Richtung (A) von oben nach unten aufeinander folgend
o eine obere Schmalseite (14₁),
o radial innen eine Klemmseite (16) mit zu den Flanschen (4) hin abstehenden Klemmzähnen mit mindestens zwei Erhebungen (32,34) und
o eine untere Schmalseite (14₂) des Bindemittels (10) aufweist, wobei
- parallel und weiter radial außen zur Klemmseite (16) eine Schließseite (12) angeordnet ist,
- die Schließseite (12) des Bindemittels (10) während eines Verschließvorgangs mechanisch mit dem Verschlussende (20) wechselwirkend zu funktionieren bestimmt ist, und
- die Klemmseite (16) axial (A) zueinander beabstandet über die Länge des Bindemittels (10) an zumindest zwei Umfangsstellen dem Klemmgebundenen zugewandt die Erhebungen (32,34) aufweist, die nach radial innen gerichtet sind, wobei ein Klemmbereich (38) zwischen jedem zusammenwirkenden Erhebungsverband ausgeführt ist,
**dadurch gekennzeichnet, dass**
- zumindest zwei der Erhebungen (32, 34) des jeweiligen zusammenwirkenden Erhebungsverbandes als aufeinander zulaufende Schenkel, mit zumindest einer Klemmflanke (36) zumindest abschnittsweise zu dem Bindemittel (10) hin verjüngend ausgeführt ist, um während des Schließvorganges und danach anhaltend Kraft in das Klemmgebundene einzuleiten, und dass
- der Klemmbinder (1) für mehrere Durchmesser des Klemmgebundenen anpassbar ausgebildet ist, wobei der Klemmbinder (1) zum Anpassen die Klemmseite (16) ausbildende radial innere Abschnitte aufweist, die an Sollbruchstellen (18) abtrennbar ausgebildet sind, wobei jeweils eine Sollbruchstelle (18) zwischen zwei benachbart angeordneten Klemmzähnen angeordnet ist.

2. Verbindungsanordnung nach Anspruch 1,
**dadurch gekennzeichnet, dass** beide Erhebungen (32, 34) des jeweiligen zusammenwirkenden Erhebungsverbandes als symmetrisch aufeinander zulaufende Schenkel ausgeführt sind.

3. Verbindungsanordnung nach einem der vorangehenden Ansprüche,
**dadurch gekennzeichnet, dass** er zumindest auf der Schließseite (12) eine Verschlusszahnung nach dem Vorbild eines Kabelbinders aufweist.

4. Verbindungsanordnung nach einem der vorangehenden Ansprüche,
**dadurch gekennzeichnet, dass** die Erhebungen (32, 34)
- aus demselben Material des Klemmbinders angeformt sind und/oder
- als separate Teile, besonders bevorzugt lösbar, auf der Klemmseite (16) mit dem Klemmbinder (10) verbunden sind.

5. Verbindungsanordnung nach einem der vorangehenden Ansprüche,
**dadurch gekennzeichnet, dass** drei Erhebungsverbände sternförmig um das Klemmgebundene herum verteilt auf der Klemmseite (16) angeordnet sind, um Klemmbereiche (38) auszubilden.

6. Verbindungsanordnung nach einem der vorangehenden Ansprüche,
**dadurch gekennzeichnet, dass** zumindest eine der axial (A) beabstandeten Erhebungen (32, 34) um das Klemmgebundene zumindest abschnittsweise umlaufend ausgebildet ist.

7. Verbindungsanordnung nach einem der vorangehenden Ansprüche,
**dadurch gekennzeichnet, dass** das Bindemittel (10) ein Band, ein Seil oder eine Kette ist.

8. Verbindungsanordnung nach einem der vorangehenden Ansprüche,
**dadurch gekennzeichnet, dass** der Klemmbinder (1) vollständig aus Kunststoff besteht, insbesondere vollständig aus einem einzigen Material spritzgegossen ist.

9. Verbindungsanordnung nach einem der vorangehenden Ansprüche,
**dadurch gekennzeichnet, dass** das Verschlussende (20) einen zerstörungsfrei lösbar verschließbaren, insbesondere wiederverschließbaren, Verschluss aufweist.

10. Verbindungsanordnung nach einem der vorangehenden Ansprüche,
**dadurch gekennzeichnet, dass** zumindest abschnittsweise umlaufend um die Achse (A) das Bindemittel geteilt ausgeführt ist, insbesondere als axial (A) durchgehend getrenntes aber aufeinander anliegendes Doppelband, wobei besonders bevorzugt auf einem durchgehend umlaufenden Trägerbindemittel radial innen auf diesem Trägerbindemittel verschiebbar geführt angeordnete Klemmabschnitte die Klemmseite (16) ausbilden.

11. Verbindungsanordnung nach einem der vorangehenden Ansprüche,
**dadurch gekennzeichnet, dass** die Klemmseite (16) nach radial dem Klemmgebundenen zugewandte Klemmzähne aufweist, insbesondere trapezförmig konisch nach radial innen verjüngt ausgebildete Klemmzähne.

12. Verbindungsanordnung nach einem der vorangehenden Ansprüche,
**dadurch gekennzeichnet, dass** ein die Schließseite (12) aufweisendes Außenband axial voneinander beabstandet zwei Innenkonturen (13) aufweist, welche Innenkonturen (13) flächenkongruent zu Außenkonturen eines die Klemmseite (16) aufweisenden Innenbandes ausgeführt sind.

13. Verbindungsanordnung nach einem der vorangehenden Ansprüche,
**dadurch gekennzeichnet, dass** in einem Verschlussbereich an dem Verschlussende (20) oder daran angrenzend ein nach radial innen ausgerichteter Absatz (11) und oder eine von axialen Seiten her aufeinander zulaufende Schmalseiteneinschnürungen an dem Bindemittel (10) ausgeführt ist.

14. Andockverfahren zum insbesondere kontaminationsfreien Verbinden zweier Gebinde oder Rohrleitungen mit einer Verbindungsanordnung nach einem der vorangehenden Ansprüche.

15. Kuppelverfahren umfassend die Verfahrensschritte
- Umlegen eines einzigen Klemmbinders (1) der Verbindungsanordnung nach einem der Ansprüche 1 bis 13, um zwei klemmzubindene Kuppelenden, wie Rohrenden, Flansche (4) oder dergleichen, bis ein freies Ende (30) mit einem Verschlussende (20) des Klemmbinders (1) eine Verbindung eingeht,
- Nachjustieren der Kuppelenden,
- Anziehen der Verbindung mittels Zug am freien Ende (30), wobei die Kuppelenden aneinander mit der Verbindungsanordnung nach Anspruch 1 geklemmt werden.

## Claims

1. A connection arrangement comprising
- two clamp tying coupling ends such as pipe ends, flanges (4), or the like, and a clamp tie (1) for docking the coupling ends, wherein
- the clamp tie (11) comprises at least one flexible tie member (10) having a closure end (20) and a free end (30) to be brought into connection with the closure end (20), said tie member (10) being closable in a stepped latching, or continuous manner about an axis (A), wherein
- a clamp tied means comprises the two clamp tying coupling ends and extends radially within the tie member (10) in the direction of the axis (A);
- the tie member (10) has, following one another from top to bottom in the axial direction (A),
o an upper narrow side (14₁);
o radially inwardly, a clamping side (16) having clamp teeth projecting toward the flanges (4) and with at least two elevated portions (32, 34); and
o a lower narrow side (14₂) of the tie member (10),
wherein
- a closing side (12) is arranged in parallel with and further radially outwardly with respect to the clamping side (16);
- the closing side (12) of the tie member (10) is disposed to operate mechanically interactively with the closure end (20) during a closing procedure; and
- the clamping side (16) has the elevated portions (32, 34) that are spaced apart axially (A) from one another over the length of the tie member (10) at at least two peripheral points facing the clamp tied means and that are directed radially inwardly, with a clamping region (30) being formed between each cooperating elevated portion assembly,
**characterized in that**
- at least two of the elevated portions (32, 34) of the respective cooperating elevated portion assembly are formed as mutually converging limbs having at least one clamping flank (36) tapering at least sectionally toward the tie member (10) to introduce force continuously into the clamp tied means during the closing procedure and thereafter; and **in that**
- the clamp tie (1) is adaptable to a plurality of diameters of the clamped tie means, with the clamp tie (1) having radially inner sections forming the clamping side (16) for the adaptation that are separable at predetermined breaking points (18), with a predetermined breaking point (18) being respectively arranged between two clamping teeth arranged adjacent to one another.

2. A connection arrangement in accordance with claim 1, **characterized in that** both elevated portions (32, 34) of the respective cooperating elevated portion assembly are designed as limbs symmetrically converging toward one another.

3. A connection arrangement in accordance with one of the preceding claims,
**characterized in that** it has a toothed closure arrangement along the lines of a cable tie on at least the closing side (12).

4. A connection arrangement in accordance with one of the preceding claims,
**characterized in that** the elevated portions (32, 34)
- are formed from the same material as the clamp tie; and/or
- are connected as separate parts, particularly preferably releasably, to the clamp tie (10) on the clamping side (16).

5. A connection arrangement in accordance with one of the preceding claims,
**characterized in that** three elevated portion assemblies are arranged distributed in a star pattern around the clamp tied means to form clamping regions (30).

6. A connection arrangement in accordance with one of the preceding claims,
**characterized in that** at least one of the axially (A) spaced apart elevated portions (32, 34) is formed at least sectionally running around the clamp tied means.

7. A connection arrangement in accordance with one of the preceding claims,
**characterized in that** the tie member (10) is a belt, a rope, or a chain.

8. A connection arrangement in accordance with one of the preceding claims,
**characterized in that** the clamp tie (1) completely consists of plastic, is in particular completely injection molded from a single material.

9. A connection arrangement in accordance with one of the preceding claims,
**characterized in that** the closure end (20) has a closure that is releasably closable, in particular reclosable, in a non-destructive manner.

10. A connection arrangement in accordance with one of the preceding claims,
**characterized in that** that the tie member is formed as divided at least sectionally running around the axis (A), in particular as an axially (A) continuously separated, but mutually contacting double belt, with clamping sections particularly preferably arranged on a continuously running around carrier tie member and guided displaceably radially inwardly on said carrier tie member forming the clamping side (16).

11. A connection arrangement in accordance with one of the preceding claims,
**characterized in that** the clamping side (16) has clamping teeth radially facing the clamp tied means, in particular clamping teeth formed in trapezoid form tapered conically radially inwardly.

12. A connection arrangement in accordance with one of the preceding claims,
**characterized in that** an outer belt having the closing side (12) has two inner contours (13) axially spaced apart from one another, said inner contours (13) being surface-congruent with outer contours of an inner belt having the clamping side (16).

13. A connection arrangement in accordance with one of the preceding claims,
**characterized in that** a radially inwardly aligned step (11) is formed in a closure region at the closure end (20) and/or adjacent thereto or narrow side constrictions tapering toward one another from axial sides are formed at the tie member (10).

14. A docking method for an in particular contamination-free connection of two units or lines having a connection arrangement in accordance with one of the preceding claims.

15. A coupling method comprising the method steps
- placing a single clamp tie (1) of the connection arrangement in accordance with one of the claims 1 to 13, about two coupling ends to be clamp tied such as pipe ends, flanges, or the like until a free end (30) enters into a connection with a closure end (20) of the clamp tie (1);
- readjusting the coupling ends; and
- tightening the connection by means of tension at the free end (30), with the coupling ends being clamped to one another by the connection arrangement in accordance with claim 1.

## Revendications

1. Dispositif de serrage, comprenant
- deux extrémités d'accouplement à relier par serrage telles que des extrémités de tubes, des brides (4) ou similaires, ainsi qu'un lien de serrage (1) destiné à l'arrimage des extrémités d'accouplement, dans lequel
- le lien de serrage (1) est constitué d'au moins un moyen de liaison (10) flexible doté d'une extrémité de fermeture (20) et d'une extrémité libre (30) à amener en liaison avec l'extrémité de fermeture (20), ledit moyen de liaison (10) pouvant être fermé autour d'un axe (A) en continu ou graduellement par crans, dans lequel
- un ensemble de serrage comprend les deux extrémités d'accouplement à relier par serrage et s'étend radialement à l'intérieur du moyen de liaison (10) en direction de l'axe (A),
- le moyen de liaison (10) présente, dans la direction axiale (A), successivement de haut en bas
o un côté étroit supérieur (14₁),
∘ radialement à l'intérieur, un côté serrage (16) doté de dents de serrage dépassant vers les brides (4) avec au moins deux protubérances (32, 34) et
∘ un côté étroit inférieur (14₂) du moyen de liaison (10), dans lequel
- un côté fermeture (12) est disposé parallèlement et radialement davantage à l'extérieur par rapport au côté de serrage (16),
- le côté fermeture (12) du moyen de liaison (10) est destiné à fonctionner en interagissant mécaniquement avec l'extrémité de fermeture (20) pendant un processus de fermeture, et
- le côté serrage (16) présente les protubérances (32, 34) espacées axialement (A) l'une de l'autre, tournées vers l'ensemble de serrage en au moins deux points circonférentiels sur la longueur du moyen de liaison (10), lesquelles sont orientées radialement vers l'intérieur, une zone de serrage (38) étant réalisée entre chaque groupe de protubérances en interaction,
**caractérisé en ce que**
- au moins deux des protubérances (32, 34) du groupe respectif de protubérances en interaction sont réalisées sous la forme de bras convergents, avec au moins un flanc de serrage (36) s'amincissant au moins sur certaines parties vers le moyen de liaison (10) pour introduire, pendant le processus de fermeture et continuellement après celui-ci, de la force dans l'ensemble de serrage, et **en ce que**
- le lien de serrage (1) est conçu de manière adaptable pour plusieurs diamètres de l'ensemble de serrage, le lien de serrage (1) présentant, pour l'adaptation, des parties radialement intérieures formant le côté serrage (16), qui sont conçues de manière séparable au niveau de points destinés à la rupture (18), un point destiné à la rupture (18) étant respectivement disposé entre deux dents de serrage disposées l'une à côté de l'autre.

2. Dispositif de serrage selon la revendication 1,
**caractérisé en ce que** les deux protubérances (32, 34) du groupe respectif de protubérances en interaction sont réalisées sous la forme de bras symétriquement convergents.

3. Dispositif de serrage selon l'une des revendications précédentes, **caractérisé en ce qu'**il présente, au moins sur le côté fermeture (12), une denture de fermeture sur le modèle d'un collier de serrage.

4. Dispositif de serrage selon l'une des revendications précédentes, **caractérisé en ce que** les protubérances (32, 34)
- sont formées du même matériau que le lien de serrage et/ou
- sont reliées, de manière particulièrement préférée de manière libérable, au lien de serrage (10) sur le côté serrage (16) sous la forme de pièces séparées.

5. Dispositif de serrage selon l'une des revendications précédentes, **caractérisé en ce que** trois groupes de protubérances sont disposés sur le côté serrage (16) répartis en forme d'étoile autour de l'ensemble de serrage pour former des zones de serrage (38).

6. Dispositif de serrage selon l'une des revendications précédentes, **caractérisé en ce qu'**au moins une des protubérances (32, 34) espacées axialement (A) est conçue de manière périphérique au moins sur certaines parties autour de l'ensemble de serrage.

7. Dispositif de serrage selon l'une des revendications précédentes, **caractérisé en ce que** le moyen de liaison (10) est une bande, un câble ou une chaîne.

8. Dispositif de serrage selon l'une des revendications précédentes, **caractérisé en ce que** le lien de serrage (1) est constitué entièrement de matière plastique, en particulier entièrement moulé par injection en un seul matériau.

9. Dispositif de serrage selon l'une des revendications précédentes, **caractérisé en ce que** l'extrémité de fermeture (20) présente un organe de fermeture apte à être fermé, en particulier refermé, de manière libérable sans destruction.

10. Dispositif de serrage selon l'une des revendications précédentes, **caractérisé en ce que** le moyen de liaison est réalisé au moins sur certaines parties séparé de manière périphérique autour de l'axe (A), en particulier sous la forme d'une double bande séparée axialement (A) sans interruption mais reposant l'une sur l'autre, dans lequel, de manière particulièrement préférée, des parties de serrage disposées sur un moyen de liaison support périphérique continu, guidées de manière coulissante radialement à l'intérieur sur ce moyen de liaison support, forment le côté serrage (16).

11. Dispositif de serrage selon l'une des revendications précédentes, **caractérisé en ce que** le côté serrage (16) présente des dents de serrage tournées radialement vers l'ensemble de serrage, en particulier des dents de serrage conçues avec un amincissement radial vers l'intérieur de manière conique en forme de trapèze.

12. Dispositif de serrage selon l'une des revendications précédentes, **caractérisé en ce qu'**une bande extérieure présentant le côté fermeture (12) présente deux contours intérieurs (13) espacés axialement l'un de l'autre, lesdits contours intérieurs (13) étant réalisés avec une congruence de surface avec des contours extérieurs d'une bande intérieure présentant le côté serrage (16).

13. Dispositif de serrage selon l'une des revendications précédentes, **caractérisé en ce que**, dans une zone de fermeture à l'extrémité de fermeture (20) ou adjacente à celle-ci, un talon (11) orienté radialement vers l'intérieur et ou des rétrécissements de côtés étroits convergents depuis des côtés axiaux sont réalisés sur le moyen de liaison (10).

14. Procédé d'arrimage pour la liaison en particulier sans contamination de deux éléments liés ou tuyaux avec un dispositif de serrage selon l'une des revendications précédentes.

15. Procédé d'accouplement comprenant les étapes de procédé consistant à
- placer un unique lien de serrage (1) du dispositif de serrage selon l'une des revendications 1 à 13 autour de deux extrémités d'accouplement à relier par serrage, telles que des extrémités de tubes, des brides (4) ou similaires, jusqu'à ce qu'une extrémité libre (30) entre en liaison avec une extrémité de fermeture (20) du lien de serrage (1),
- ajuster les extrémités d'accouplement,
- serrer la liaison en tirant sur l'extrémité libre (30), les extrémités d'accouplement étant serrées l'une contre l'autre avec le dispositif de serrage selon la revendication 1.
